# EUROPÄISCHE PATENTSCHRIFT

(11) **EP 1 600 057 B1**
(45) Veröffentlichungstag und Bekanntmachung des Hinweises auf die Patenterteilung: **17.09.2008**
(21) Anmeldenummer: 04012619.5
(22) Anmeldetag: 27.05.2004
(51) Int. Cl.: A21B 5/02

(54) **Ofen zum Backen von Teigwaren**
Oven for baking dough.
Four pour cuire de la pâte

(43) Veröffentlichungstag der Anmeldung: 30.11.2005
(73) Patentinhaber: Bott, Ulrich, Dipl.-Ing., 64347 Griesheim (DE); Grenzfurthner, Johannes, 3622 Mühldorf (AT)
(72) Erfinder: Bott, Ulrich, 64347 Griesheim (DE)
(74) Vertreter: KEIL & SCHAAFHAUSEN Patentanwälte

(56) Entgegenhaltungen:
- EP-A- 0 061 545
- EP-A- 0 096 256
- DE-C- 164 277

## Beschreibung

Die Erfindung betrifft einen Ofen zum Backen von Teigwaren, insbesondere einen Waffelofen, mit mehreren einander paarweise zugeordneten Backplatten und wenigstens einer Wärmequelle zur Temperierung der Backplatten.

Bei einem derartigen, bspw. aus der DE 199 42 806 A1 bekannten Waffelbackofen sind die Backplatten über eine umlaufende endlose Backzangenkette miteinander verbunden. Die rechteckigen Backplatten sind dabei paarweise über ein Scharnier, welches an einer ihrer kurzen Seiten angeordnet ist, derart miteinander verbunden, dass sie zwischen einer V-förmigen geöffneten Stellung und einer im Wesentlichen parallel aufeinander liegenden geschlossenen Stellung verschwenkbar sind.

Das Backen der Waffeln erfolgt bei diesen bekannten Waffelbacköfen kontinuierlich, wobei ein flüssiger Teig bspw. in Streifen zwischen ein geöffnetes Backplattenpaar aufgegossen wird, wonach die Backplatten geschlossen und verriegelt werden. Zwischen den beheizten Backplatten verdampft das im Teig enthaltene Wasser und formt dabei unter Druck zwischen den Backplatten eine Waffel aus. Durch weitere Wärmezufuhr wird die Waffel zwischen den Backplatten ausgebacken. Am Ende des von den Backplattenpaaren beschriebenen Kreislaufs werden diese wieder geöffnet, so dass das fertige Waffelblatt herausfallen und der Weiterverarbeitung zugeführt werden kann.

Die Beheizung der Backplatten erfolgt dabei zumeist über eine direkte Gasbefeuerung. Hierzu ist unter jedem Trum der Zangenkette ein Brennerstrang angeordnet, so dass im Obertrum eine erste Backplatte, die Unterplatte, und im Untertrum die dieser zugeordnete Backplatte, die Oberplatte, beheizt wird.

Die Brennerstränge bestehen aus Rohren, die ein Gasgemisch den bspw. schwenkbaren, mit Düsen bestückten Brennern zuführen. Die bekannten Waffelofenbrenner müssen häufig mit einem fetten Gemisch, d. h. einem Luft-Brennstoff-Gemisch, das nicht genügend Luftsauerstoff zur vollständigen Verbrennung enthält, betrieben werden, da nur auf diese Weise ein weicher, gleichmäßiger Flammenteppich erzeugt werden kann. Folglich muss zur vollständigen Verbrennung zusätzlicher Sauerstoff aus der Luft im Ofen herangezogen werden. Dieser ist für den dem Untertrum zugeordneten Brenner ausreichend verfügbar. Der dem Obertrum zugeordnete Brenner wird jedoch von den Abgasen des Unterbrenners beeinflusst. Um auch bei dem dem Obertrum zugeordneten Brenner ein akzeptables Flammenbild zu erzeugen, wird mit einem Absauggebläse Frischluft durch den Ofen gesaugt. Diese erwärmt sich auf ihrem Weg durch den beheizten Raum und transportiert dabei Energie aus dem Ofen, die somit nicht dem Backprozess zur Verfügung steht.

Die Verbindung der Backplatten über das Scharnier an ihren kurzen Seiten macht es häufig erforderlich, dass den Backplatten zusätzliche Versteifungselemente, bspw. eine Gusszange, zugeordnet sind. Wenn der Abstand zwischen den Brennern und den Backplatten dabei so gewählt wird, dass die Rückseite der Backplatten exakt durch den heißesten Bereich der Flammen, d. h. die Flammenlänge im Dauerbetriebszustand, fahren, stören diese Versteifungselemente die Flammen jedoch, was zu einem Anstieg der Emission führt. In bekannten Öfen ist der Flammendurchlaufabstand daher so gewählt, dass die Backplattenrückseite nicht durch die heißesten Zonen der Flamme, sondern in größerem Abstand hiervon durchläuft.

Aus diesen beschriebenen Effekten resultiert ein vergleichsweise niedriger Wirkungsgrad von etwa 50% der bekannten Waffelöfen. Nach thermodynamischen Untersuchungen liegen die Abgasverluste, denen die zusätzlich durchgesaugte und erwärmte Luft zugerechnet wird, bei etwa 36%. Weiter ist es bei den herkömmlichen Brennern nur bei optimalen Bedingungen und exakter Einstellung möglich, die weltweit gültigen Abgaswerte, insbesondere für CO, einzuhalten. In den meisten Fällen produzieren die Waffelbacköfen jedoch ein Vielfaches der zulässigen Emissionen. Ein derartiger Ofen ist aus der EP 0 096 256 A2 bekannt. Zur Kühlung der Waffeln ist den Backplatten ein Wärmetauscher zugeordnet. Diese Kühlung der Backplatten führt zu einem noch höheren Energieaufwand.

Ein weiterer Nachteil der bekannten Waffelbacköfen liegt darin, dass ausschließlich gasförmige Brennstoffe eingesetzt werden können, die jedoch nicht an jeder Produktionsstätte in ausreichender Menge zur Verfügung stehen.

Weiter wird es als nachteilig empfunden, dass die Größe der Backplatten auf etwa 350 mm x 700 mm beschränkt ist, da die Haltekräfte zum Verschließen der Backplattenpaare während des Backvorgangs andernfalls nur schwer aufgebracht werden könnten. Eine Vergrößerung der Backplatten könnte jedoch den Produktionsausstoß bei nur unwesentlicher Vergrößerung des Gesamtmaschinenvolumens deutlich steigern, was sich vorteilhaft auf die Herstellkosten des Ofens im Verhältnis zu seiner Kapazität auswirken würde. Gleichzeitig bringt eine Vergrößerung der Backplatten auch energetische Vorteile mit sich, da die aufzuheizende Masse sowie die Gehäuseoberfläche stark unterproportional zu der gewonnen Kapazitätssteigerung zunehmen.

Weiter sind Waffelbacköfen bekannt, bei welchen die Backplattenpaare auf einer rotierenden Welle oder einem Rundtisch entweder parallel oder senkrecht zu der Umlaufrichtung angeordnet sind. Die Beheizung dieser Backplattenpaare erfolgt, wie beispielsweise aus der EP 0 061 545 A2 bekannt, über ein auf dieser aufgeschraubtes elektrisches Widerstandsheizelement oder über heißes Wasser bzw. Wasserdampf, welches unter einem Druck von etwa 16 bar durch Langlochbohrungen in den Backplatten geleitet wird. Die Anzahl der Backplattenpaare ist bei diesen bekannten Öfen durch die Anordnung in unmittelbarer Nähe der Welle bei einer Backplattengröße von etwa 290 mm x 470 mm auf maximal 12 beschränkt, so dass die Kapazität dieser bekanntten Anlagen gering ist. Zudem treten bei der Verwendung von heißem Wasser oder Wasserdampf als Temperiermedium häufig Korrosion an den Backplatten und dem gesamten Medium führenden System auf, was insbesondere in Verbindung mit dem hohen Druck von etwa 16 bar des Temperiermediums zu Problemen führt. Weiter ist die Ausbildung von Kanälen innerhalb der Backplatten schwierig und teuer. Die alternative Beheizung der einzelnen Backplattenpaare über elektrische Widerstandsheizelemente ist aufgrund der hohen Stromkosten zumeist unwirtschaftlich.

Ausgehend hiervon stellt sich die vorliegende Erfindung die Aufgabe, einen Ofen zum Backen von Teigwaren der eingangs genannten Art bereitzustellen, welcher die oben beschriebenen Probleme vermeidet und mit gutem Wirkungsgrad ein verbessertes Backergebnis erzielt.

Diese Aufgabe wird erfindungsgemäß im Wesentlichen dadurch gelöst, dass die Backplatten in einem radartigen Träger, der um eine Achse rotierbar ist, derart gelagert sind, dass sie sich beabstandet von der Achse im Wesentlichen radial von dieser weg erstrecken, und dass den Backplatten jeweils wenigstens ein Wärmetauscher zugeordnet ist, der von einem über eine Wärmequelle temperierten Medium mit einem Druck von unter 12 bar, vorzugsweise unter 7 bar durchströmt wird. Dabei erstrecken sich die Backplattenpaare in einem geschlossenen Zustand, in welchem sie zumindest näherungsweise aneinander anliegen, im Wesentlichen in einer Ebene, die durch die Achse des Trägers und einer sich radial von dieser weg erstreckenden Richtung aufgespannt ist. Die Backplattenpaare sind folglich in ihrem geschlossenen Zustand im Wesentlichen senkrecht zu der Rotationsrichtung des radartigen Trägers positioniert. Diese Anordnung erleichtert das Befüllen der Backplattenpaare mit einem zu backenden Teig sowie die Entnahme der fertig gebackenen Waffeln oder dgl. aus dem Ofen. Durch die von der Achse des radartigen Trägers beabstandete Anordnung der Backplatten und deren erfindungsgemäße Ausrichtung können deutlich mehr Backplatten in dem Ofen angeordnet werden als bei der bekannten achsnahen Anordnung der Backplatten. Gleichzeitig wird durch die den Backplatten zugeordneten Wärmetauscher eine besonders gleichmäßige und kontinuierliche Temperierung der Backplatten ermöglicht, wodurch das Backergebnis verbessert wird. Zudem fällt der Ofen bei derart geringem Druck des zur Temperierung eingesetzten Mediums nicht unter die Druckbehälterverordnung, so dass teure und aufwendige Dichtigkeits- und Festigkeitsprüfungen entbehrlich sind.

Die Anzahl der Zuführleitungen zur Einleitung des Mediums in die Wärmetauscher kann dadurch minimiert werden, dass eine Ringleitung vorgesehen ist, durch welche das temperierte Medium aus der Wärmequelle strömt, wobei die Ringleitung dann mit den einzelnen Wärmetauschern verbunden sein kann. Die Ringleitung muss dabei nicht einen Kreislauf für das Medium bilden, vielmehr ist die Ringleitung vorzugsweise eine zumindest bereichsweise ringförmig gestaltete Verteilerleitung, von der die Zuführleitungen zu den Backplatten abzweige.

Um eine große Anzahl von Backplattenpaaren in dem Ofen anzuordnen, ist der Träger vorzugsweise ein Speichenrad, an dessen von der Achse entfernten Bereich die Backplatten befestigt sind. Der Träger kann als ein einseitiges Speichenrad ausgebildet sein, so dass sich im Schnitt eine etwa C-förmige Konfiguration des Rades ergibt. Alternativ kann der Träger auch durch ein im Schnitt ebenfalls etwa C-förmiges Trommelrad gebildet sein.

Die Ringleitung kann dabei erfindungsgemäß über eine im Wesentlichen radial verlaufende Leitung mit einer achsnah angeordneten Dreheinführung verbunden sein. Die Verbindung der Ringleitung mit den Wärmetauschern der Backplatten kann über Abzweigleitungen erfolgen, wobei die Wärmetauscher wiederum über Rücklaufleitungen mit einer zu der Wärmequelle führenden Sammelleitung verbunden sind. Die Ringleitung zur Zufuhr von temperierten Medium zu den Wärmetauschern ist entweder auf einer Seite mit der Sammelleitung für die Rückführung des Mediums positioniert oder die Ringleitung und die Sammelleitung sind auf gegenüberliegenden Seiten des radförmigen Trägers angeordnet.

Die Wärmequelle zur Temperierung des Mediums ist gemäß einer bevorzugten Ausführungsform der Erfindung ein Wärmetauscher, dem ein elektrischer Erhitzer, ein Solar- oder Geothermiekraftwerk oder insbesondere eine Verbrennungsanlage für feste, flüssige oder gasförmige Brennstoffe zugeordnet ist. Diese Verbrennungsanlage kann mit verschiedensten Brennstoffen betrieben werden, die am Produktionsort kostengünstig verfügbar sind. Weiter ist es möglich, den Verbrennungsvorgang derart zu steuern, dass ein optimaler Wirkungsgrad und ein möglichst geringer Schadstoffausstoß erzielt wird. Es lässt sich auf diese Weise nicht nur der Gesamtenergieverbrauch der Anlage erheblich reduzieren, sondern es können auch die vielerorts strengen gesetzlichen Abgasgrenzwerte eingehalten werden.

Als Medium, welches durch die Wärmequelle erhitzt und durch die Wärmetauscher der Backplatten geleitet wird, kann ein bspw. lebensmittelechtes Thermoöl eingesetzt werden, bei welchem die bekannten Probleme der Korrosionsbildung weitestgehend vermieden werden. Eine bevorzugte Backtemperatur für Waffeln von etwa 150 bis 220°C kann schon mit geringem Öldruck von etwa 2 bar Überdruck erreicht werden. Es sind somit in der Konstruktion der Leitungen und der Wärmetauscher geringere Anforderungen an die Druckdichtigkeit zu stellen als bei bekannten mit heißem Wasser oder Wasserdampf betriebenen Öfen.

Die den Backplatten zugeordneten Wärmetauscher sind vorzugsweise auf der dem zu backenden Teig abgewandten Seite der Backplatten befestigt. Grundsätzlich ist es möglich, das Temperiermedium bspw. in entsprechenden Bohrungen auch direkt durch die Backplatten zu leiten, allerdings sind die Wärmetauscher vorzugsweise durch mit den Backplatten verbundene Bleche gebildet, die Kanäle zur gleichmäßigen Beheizung der Backplatten definieren. Im Gegensatz zu den bekannten Waffelbacköfen, bei denen die Backplatten durch offene Flammen geführt und somit intermittierend beheizt werden, herrscht bei dem erfindungsgemäßen Aufbau der Backplatten mit Wärmetauschern während des gesamten Backvorgangs ein nahezu konstantes und gleichmäßiges Temperaturniveau, wodurch nicht nur die Energiekosten gesenkt werden, sondern auch das Backergebnis verbessert wird.

Wenn eine möglichst große Anzahl von Backplattenpaaren in dem Ofen angeordnet werden soll, muss der Abstand zwischen den Backplattenpaaren gering gehalten werden. Dies kann u. a. dadurch erreicht werden, dass in die Wärmetauscher flanschartige Anschlusselemente zur Verbindung der Wärmetauscher über einen Schlauch oder dgl. mit der Ringleitung integriert sind. Diese Anschlusselemente bauen besonders flach, so dass die Dicke der Backplatten mit den Wärmetauschern gering gehalten werden kann. Die Anschlusselemente können derart in die Wärmetauscher integriert sein, dass ein Ausreißen der Anschlusselemente in dem dünnen Blech der Wärmetauscher vermieden wird.

Nach einer bevorzugten Ausführungsform der Erfindung sind die Backplatten näherungsweise rechteckig ausgebildet, wobei jede zweite Backplatte als Unterplatte fest mit dem Träger verbunden ist und die übrigen Backplatten als Oberplatten an einer Langseite der Backplatten über ein Scharnier mit jeweils einer der Unterplatten schwenkbar verbunden sind. Dabei können mehrere Scharniere näherungsweise parallel zu der Achse des Trägers ausgerichtet sein. Vorzugsweise sind auf der den Scharnieren gegenüberliegenden Langseite der Backplatten mehrere Verschlüsse zur Verriegelung der Backplatten in ihrem geschlossenen Zustand vorgesehen.

Durch diese Ausgestaltung werden die auf das Scharnier sowie auf die Verschlüsse wirkenden Kräfte im geschlossenen Zustand der Backplattenpaare erheblich reduziert. Es ist somit möglich, auch deutlich größere Abmessungen der Backplatten zu realisieren, wobei sich die langen Seiten der Backplatten im Wesentlichen parallel zu der Achse des Trägers erstrecken und die kurzen Seiten der Backplatten radial von der Achse des Trägers wegstehen. Diese Anordnung der Verriegelungen und der Scharniere an den langen Seiten der Backplatten führt dazu, dass die auftretenden Haltekräfte nur über eine geringe Länge der Backplatten aufzunehmen sind, wodurch einerseits die Kräfte auf mehrere Verschlüsse und Scharnierelemente verteilt werden, so dass diese entsprechend geringer dimensioniert werden können. Gleichzeitig wird auch die Durchbiegung der Backplatten unter dem Dampfdruck vermieden oder zumindest reduziert. Die Breite der Backplatten kann somit in Abhängigkeit des zur Verfügung stehenden Bauraumes beliebig erweitert werden.

Um einen kontinuierlichen Betrieb des erfindungsgemäßen Backofens zu ermöglichen, können die Oberplatten Hebel aufweisen, die bei Rotation des Trägers um die Achse derart mit einer Kulisse zusammenwirken, dass die Oberplatten an einem definierten Bahnpunkt in eine sich V-förmig von den Unterplatten weg erstreckende geöffnete Position verschwenken. In dieser Position kann die fertig gebackene Waffel aus dem Backplattenpaar entnommen werden und darauffolgend ungebackener Teig auf das Backplattenpaar aufgebracht werden. Dies kann bspw. durch einen bewegbaren Teigaufgießer erfolgen, der dem Träger zugeordnet ist.

Der erfindungsgemäße Ofen ist bei einer Bauhöhe von bspw. etwa 5 m zur Bestückung mit über 30 Backplattenpaaren, vorzugsweise etwa 50 Backplattenpaaren geeignet. Die Backplattenpaare können eine im Vergleich zu herkömmlichen Öfen gesteigerte Breite von bspw. etwa 1 m oder 1,5 m aufweisen. Hierdurch ergibt sich zusammen mit der großen Anzahl der Backplattenpaare eine besonders hohe Kapazität des Ofens, die eine wirtschaftliche Produktion von Waffeln oder dgl. ermöglicht.

Weiterbildungen, Vorteile und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen schematisch:
- Fig. 1: einen erfindungsgemäßen Ofen in Seitenansicht,
- Fig. 2: eine Draufsicht auf den Ofen gemäß Fig. 1,
- Fig. 3: das Öffnen von Backplattenpaaren in dem Ofen gemäß Fig. 1,
- Fig. 4: das Verschließen von Backplattenpaaren in dem Ofen gemäß Fig. 1,
- Fig. 5: in Draufsicht ein Wärmetauscherelement zur Befestigung an Backplatten in dem Ofen gemäß Fig. 1,
- Fig. 6: ein Schnitt entlang der Linie C-C in Fig. 5,
- Fig. 7: einen Schnitt entlang der Linie B-B in Fig. 5, und
- Fig. 8: eine Ansicht auf einen Ausschnitt des Wärmetauschers gesehen in Richtung des Pfeils E in Fig. 7.

Der in den Figuren dargestellte Waffelofen 1 ist im Wesentliche als ein Speichenrad aufgebaut, welches auf einer Stützkonstruktion 2 mittels einer Lagerung 3 drehbar gelagert ist. Von einer in der Lagerung 3 gelagerten Welle 4 zweigen mehrere Speichen 5 ab, die einen bspw. segmentartig aufgebauten Ring 6 halten.

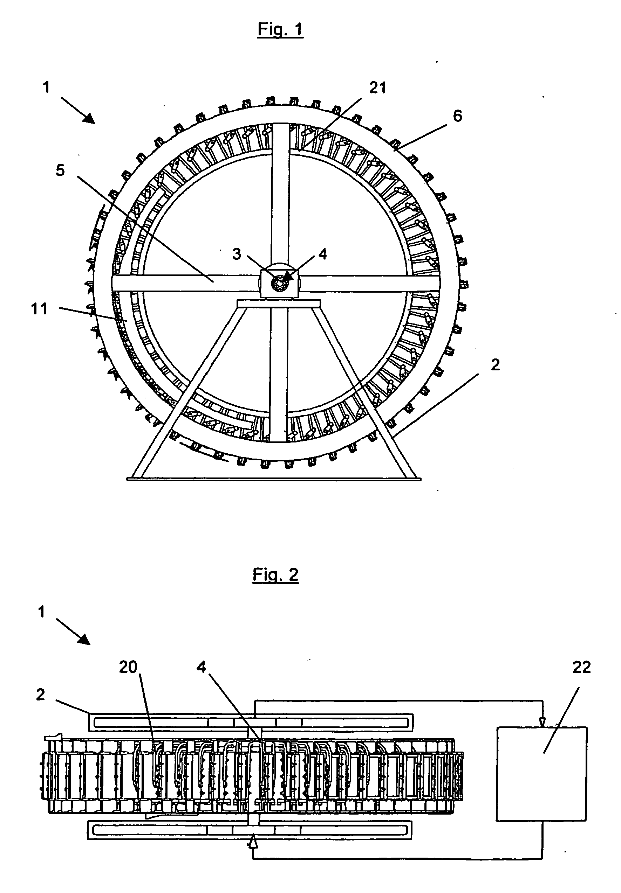

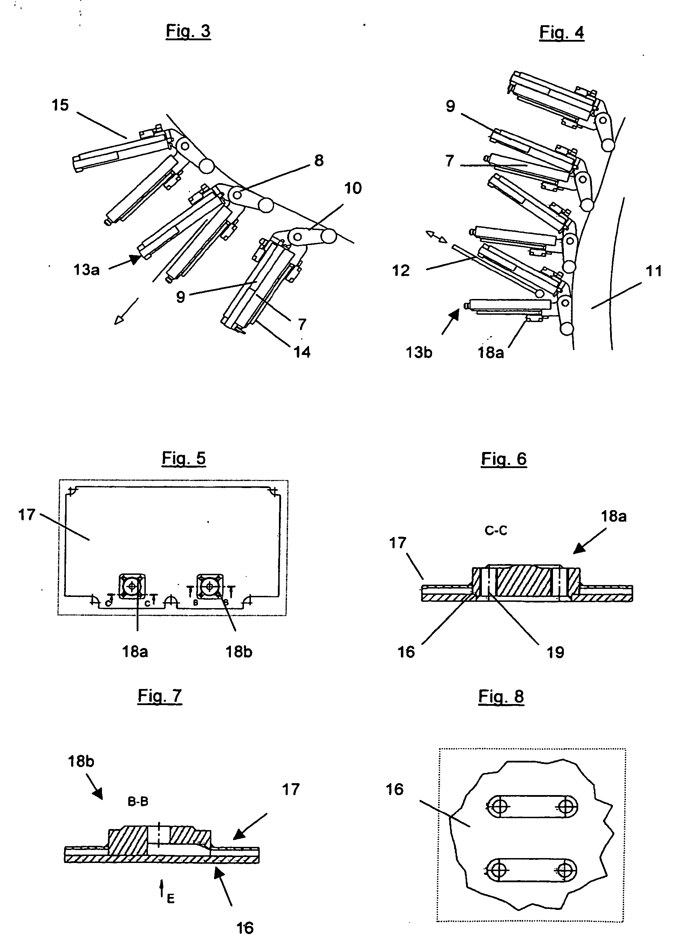

In dem Ring 6 sind mehrere Backplatten gelagert, wobei die Backplatten einander paarweise zugeordnet sind. Jedes Backplattenpaar besteht aus einer starr mit dem Ring 6 verbundenen Unterplatte 7, die, wie in den Figuren 3 und 4 dargestellt, über ein Scharnier 8, das durch mehrere parallel zueinander angeordnete Scharniere gebildet ist, mit einer Oberplatte 9 verbunden ist. Die Oberplatte 9 ist durch das Scharnier 8 schwenkbar an der Unterplatte 7 gelagert und ist starr mit einem Hebel 10 verbunden. Die Backplatten haben eine im Wesentlichen rechteckige Gestalt und sind in dem Waffelofen 1 senkrecht zu der Umlaufrichtung, die in Fig. 1 dem Uhrzeigersinn entspricht, positioniert. Durch die hohe Anzahl der Scharniere werden die in den Backplatten auftretenden maximalen Spannungen erheblich reduziert.

Auf der linken Seite in Fig. 1 ist eine ortsfest angeordnete Kulisse 11 dargestellt, welche derart angeordnet und gestaltet ist, dass die mit den Oberplatten 9 verbundenen Hebel 10 bei einer Umdrehung des Rings 6 mit der Kulisse 11 in Kontakt treten können. Hierdurch werden die Oberplatten 9 aus einer in Fig. 3 unten abgebildeten geschlossenen Position, in welcher die Oberplatten 9 im Wesentlichen flach auf den Unterplatten 7 aufliegen, in eine in Fig. 3 oben dargestellte geöffnete Position verschwenkt, in welcher die Oberplatte 9 V-förmig von der Unterplatte 7 weg ragt. Durch diese Öffnung des Backplattenpaares kann eine Waffel oder dgl., welche in dem zwischen den beiden Backplatten definierten Backraum aufgenommen ist, wie durch den Pfeil in Fig. 3 angedeutet, aus den Backplatten entnommen werden. Die Kulisse 11 ist weiter so gestaltet, dass die Oberplatten 9 bei fortgesetzter Umdrehung des Rings 6 im Uhrzeigersinn, wie in Fig. 4 angedeutet, wieder geschlossen werden. Zuvor kann mittels eines Teigaufgießers 12 bspw. flüssiger Teig in den geöffneten Backraum zwischen den Unterplatten 7 und den Oberplatten 9 eingebracht werden. Zur vollständigen Befüllung des Backraumes kann der Teigaufgießer 12 beweglich sein, so dass er in den Backraum einfahrbar ist.

Die rechteckigen Backplatten sind an ihrer der Welle 4 zugewandten Seite über das Scharnier 8 miteinander verbunden. Auf der dem Scharnier 8 gegenüberliegenden langen Seite der Backplatten ist eine Verschlussanordnung vorgesehen, die mehrere verschwenkbare Haken 13a an jeder der Oberplatten 9 und entsprechende Haltebolzen 13b an den Unterplatten 7 aufweist. Vor dem Öffnen der Backplatten gemäß Fig. 3 werden die Backplatten durch Lösen der Haken 13a von den Haltebolzen 13b entriegelt, während die Backplatten nach dem Schließen gemäß Fig. 4 wieder verriegelt werden, so dass die Backplattenpaare während des Backvorgangs geschlossen gehalten werden. Da die Oberplatten an den Unterplatten über mehrere Scharnierpunkte befestigt sind und jedem Backplattenpaar mehrere Haken 13a und mehrere Haltebolzen 13b zugeordnet sind, wirken über die kurzen Seiten der Backplatten nur geringe Kräfte auf die einzelnen Verschlusselemente, so dass selbst bei großen Abmessungen der Backplatten der während des Backvorgangs auftretende Druck nicht zu Verformungen der Backplatten führt.

Auf den Unterplatten 7 ist auf ihrer den Oberplatten 9 abgewandten Seite ein Wärmetauscher 14 angebracht, während auf den Oberplatten 9 auf ihrer den Unterplatten 7 abgewandten Seite ein Wärmetauscher 15 vorgesehen ist. Die großflächig auf den Backplatten aufliegenden Wärmetauscher 14 und 15 sind bspw. durch zwei miteinander verschweißte Bleche 16, 17 gebildet, in denen durch Sicken oder dgl. Kanäle zur Durchleitung eines temperierten Mediums ausgebildet sein können. Hierdurch kann eine besonders gleichmäßige Erwärmung der Backplatten erzielt werden, wodurch das Backergebnis positiv beeinflusst wird. In die Wärmetauscher sind, wie in den Figuren 5 bis 8 angedeutet, Anschlusselemente 18a und 18b integriert, die durch eine Aussparung in dem oberen Blech 17 eingesetzt und mit diesem Verschweißt sind. Weiter sind, wie in den Figuren 6 und 8 dargestellt, in dem unteren Blech 16 zwei Langlöcher vorgesehen, durch welche die Anschlusselemente 18a und 18b auch mit dem unteren Blech 16 verschweißbar sind. Zusätzlich können die Anschlusselemente Durchgangsbohrungen 19 aufweisen, über welche die Wärmetauscher mit den Backplatten verbindbar sind und/oder Schläuche oder dgl. Leitungen mit den Anschlusselementen verbindbar sind.

Die Wärmetauscher 14 und 15 sind über in Fig. 2 als Schläuche 20 ausgebildete Abzweigleitungen einerseits mit einer Ringleitung 21 und andererseits mit einer Sammelleitung verbunden. Sowohl die Ringleitung 21 als auch die Sammelleitung verlaufen kreisförmig in der Nähe des Rings 6, so dass sämtliche Wärmetauscher 14 und 15 der Backplatten mit einem temperierten Medium aus der Ringleitung 21 versorgt werden, welches durch die Wärmetauscher strömt und über die Sammelleitung zurückgeführt wird. Sowohl die Ringleitung 21 als auch die Sammelleitung sind über weitere Leitungen und eine Dreheinführung mit einer in Fig. 2 schematisch angedeuteten Wärmequelle 22 verbunden.

Diese Wärmequelle 22 kann insbesondere eine Verbrennungsanlage für feste, flüssige oder gasförmige Brennstoffe sein, die mit optimalem Wirkungsgrad betrieben wird. Das zur Temperierung der Backplatten mittels der Wärmetauscher eingesetzte Medium ist vorzugsweise ein Thermoöl, welches bei Temperaturen von 150 bis 220°C von der Wärmequelle 22 durch die Wärmetauscher 14 und 15 zirkuliert. Der Druck des Thermoöls kann dabei bei etwa 2 bar Überdruck liegen, so dass an die Leitungen und die Wärmetauscher nur geringe Anforderungen bezüglich der Druckfestigkeit zu stellen sind.

Der Backvorgang einer Waffel oder dgl. erfolgt in dem dargestellten Waffelofen 1, indem während der Rotation des Ringes 6 mit den daran befestigten Backplatten über den Teigaufgießer 12 Teig zwischen ein geöffnetes Backplattenpaar aufgegeben wird. Nach dem Schließen und Verriegeln des Backplattenpaares wird zwischen der Oberplatte und der Unterplatte durch die gleichmäßige Temperierung über die Wärmetauscher während der Umdrehung des Ringes 6 eine Waffel ausgebacken. Nach nahezu einer vollständigen Umdrehung wird das Backplattenpaar über die Kulisse 11 wieder geöffnet, so dass die Waffel aus dem Backplattenpaar herausfällt bzw. entnommen werden kann. Unmittelbar darauf kann neuer Waffelteig in das geöffnete Backplattenpaar eingebracht werden.

In der dargestellten Ausführungsform sind in dem Waffelofen 50 Backplattenpaare vorgesehen, so dass insbesondere auch durch die großen Abmessungen der Backplatten von etwa 350 mm x 1500 mm im kontinuierlichen Betrieb eine große Anzahl von Waffeln produziert werden kann. Durch die zentrale Erwärmung des Mediums zum Temperieren der Backplatten ist die Waffelherstellung besonders wirtschaftlich und mit geringem Energieverbrauch und niedrigen Schadstoffemissionen möglich.

Bei herkömmlichen Öfen ist das umhauste Volumen, das sich bei Versagen von Sicherheitsmechanismen mit Gas füllen kann, relativ groß. Die vorliegende Anlage mit Thermoöl als Wärmeträger birgt daher eine geringere Explosionsgefahr.

### Bezugszeichenliste:

- 1: Waffelofen
- 2: Stützkonstruktion
- 3: Lagerung
- 4: Welle
- 5: Speiche
- 6: Ring
- 7: Unterplatte
- 8: Scharnier
- 9: Oberplatte
- 10: Hebel
- 11: Kulisse
- 12: Teigaufgießer
- 13a: Haken
- 13b: Haltebolzen
- 14, 15: Wärmetauscher
- 16: unteres Blech
- 17: oberes Blech
- 18a, 18b: Anschlusselemente
- 19: Bohrung
- 20: Schlauch
- 21: Ringleitung
- 22: Wärmequelle

## Patentansprüche

1. Ofen zum Backen von Teigwaren, insbesondere Waffelofen, mit mehreren einander paarweise zugeordneten Backplatten (7, 9) und wenigstens einer Wärmequelle (22) zur Temperierung der Backplatten (7, 9), die in einem radartigen Träger (6), der um eine Achse (4) rotierbar ist, derart gelagert sind, dass sie sich beabstandet von der Achse (4) im Wesentlichen radial von dieser wegerstrecken, **dadurch gekennzeichnet, dass** die Backplattenpaare (7, 9) sich in einem geschlossenen Zustand, in welchem sie zumindest näherungsweise aneinander anliegen, im Wesentlichen in Ebenen erstrecken, die durch die Achse (4) des Trägers (6) und eine sich radial von dieser wegerstreckende Richtung aufgespannt sind, und dass den Backplatten (7, 9) jeweils wenigstens ein Wärmetauscher (14, 15) zugeordnet ist, der von einem über die Wärmequelle (22) temperierten Medium mit einem Druck von unter 12 bar durchströmt wird.

2. Ofen nach Anspruch 1, **dadurch gekennzeichnet, dass** der Träger ein Speichenrad (5, 6) ist, an dessen von der Achse (4) entfernten Bereich die Backplatten (7, 9) befestigt sind.

3. Ofen nach Anspruch 2, **dadurch gekennzeichnet, dass** das Medium über eine Ringleitung (21), die über eine im Wesentlichen radial verlaufende Leitung mit einer achsnah angeordneten Dreheinführung verbunden ist, den Wärmetauschern (14, 15) zugeführt wird.

4. Ofen nach Anspruch 3, **dadurch gekennzeichnet, dass** die Ringleitung (21) über Abzweigleitungen (20) mit jedem Wärmetauscher (14, 15) der Backplatten (7, 9) verbunden ist, welche wiederum über Rücklaufleitungen mit einer zu der Wärmequelle (22) führenden Sammelleitung verbunden sind.

5. Ofen nach einem der vorhergehenden Ansprüche, **dadurch gekennzeichnet, dass** die Wärmequelle (22) zur Temperierung des Medium ein Wärmetauscher ist, dem ein elektrischer Erhitzer, ein Solar- oder Geothermiekraftwerk oder eine Verbrennungsanlage für feste, flüssige oder gasförmige Brennstoffe zugeordnet ist.

6. Ofen nach einem der vorhergehenden Ansprüche, **dadurch gekennzeichnet, dass** das Medium ein insbesondere lebensmittelechtes Thermoöl ist.

7. Ofen nach einem der vorhergehenden Ansprüche, **dadurch gekennzeichnet, dass** die den Backplatten (7, 9) zugeordneten Wärmetauscher (14, 15) auf der dem zu backenden Teig abgewandten Seite der Backplatten (7, 9) befestigt sind.

8. Ofen nach Anspruch 7, **dadurch gekennzeichnet, dass** die Wärmetauscher (14, 15) durch mit den Backplatten (7, 9) verbundene Bleche (16, 17) gebildet sind, die Kanäle zur gleichmäßigen Beheizung der Backplatten (7, 9) definieren.

9. Ofen nach einem der Ansprüche 7 oder 8, **dadurch gekennzeichnet, dass** in die Wärmetauscher (14, 15) flanschartige Anschlusselemente (18a, 18b) zur Verbindung der Wärmetauscher über einen Schlauch (20) oder dgl. mit der Ringleitung (21) integriert sind.

10. Ofen nach einem der vorhergehenden Ansprüche, **dadurch gekennzeichnet, dass** die Backplatten (7, 9) näherungsweise rechteckig sind, und dass jede zweite Backplatte als Unterplatte (7) fest mit dem Träger (6) verbunden ist und die übrigen Backplatten als Oberplatten (9) an einer Langseite der Backplatten über ein Scharnier (8) mit jeweils einer der Unterplatten (7) schwenkbar verbunden sind.

11. Ofen nach Anspruch 10, **dadurch gekennzeichnet, dass** die Scharniere (8) näherungsweise parallel zu der Achse (4) des Trägers (6) ausgerichtet sind.

12. Ofen nach einem der Ansprüche 10 oder 11, **dadurch gekennzeichnet, dass** auf der den Scharnieren (8) gegenüberliegenden Langseite der Backplatten (7, 9) mehrere Verschlüsse (13a, 13b) zur Verriegelung der Backplatten in ihrem geschlossenen Zustand vorgesehen sind.

13. Ofen nach einem der Ansprüche 10 bis 12, **dadurch gekennzeichnet, dass** die Oberplatten (9) Hebel (10) aufweisen, die bei Rotation des Trägers (6) um die Achse (4) derart mit einer Kulisse (11) zusammenwirken, dass die Oberplatten (9) an einem definierten Bahnpunkt in eine sich V-förmig von den Unterplatten (7) wegerstreckende geöffnete Position verschwenken.

14. Ofen nach einem der vorhergehenden Ansprüche, **dadurch gekennzeichnet, dass** dem Träger (6) ein bewegbarer Teigaufgießer (12) zum Einfüllen von Teig zwischen ein Backplattenpaar (7, 9) zugeordnet ist.

15. Ofen nach einem der vorhergehenden Ansprüche, **dadurch gekennzeichnet, dass** auf dem Träger (6) mehr als 30, insbesondere etwa 50 Backplattenpaare (7, 9) angeordnet sind.

## Claims

1. An oven for baking batter, particularly a waffle oven, with a plurality of baking plates (7, 9) arranged in pairs and with at least one heat source (22) for supplying heat to the baking plates (7, 9), the baking plates (7, 9) being mounted in a wheel-like carrier (6), which is rotatable about an axis (4), such that the baking plates (7, 9) are spaced apart from said axis (4) and extend substantially radially away from said axis (4), **characterized in that** in a closed position, in which the baking plates (7, 9) rest at least approximately against one another, the baking plates (7, 9) extend substantially in planes that span through said axis and in a direction that extends radially away from said axis (4) of the carrier (6), wherein at least one heat exchanger (14, 15) is associated with a respective one of each baking plate (7, 9) with a medium heated by said at least one heat source (22) flowing at a pressure of less than 12 bar through said heat exchanger (14, 15).

2. The oven according to claim 1, **characterized in that** the carrier is a spoke wheel (5, 6) and the baking plates (7, 9) are attached to said carrier in a region remote from said axis (4).

3. The oven according to claim 2, **characterized in that** the medium is fed to the heat exchangers (14, 15) via a ring line (21) connected via an essentially radial line to a rotational feed arranged near said axis.

4. The oven according to claim 3, **characterized in that** said ring line (21) is connected to each heat exchanger (14, 15) of the baking plates (7, 9) via branching lines (20) connected via reflux lines with a collecting line leading to the heat source (22).

5. The oven according to one of the preceding claims, **characterized in that** the heat source (22) is a heat exchanger for heating the medium with an electric heater, a solar or geothermal power plant, or a combustion system for solid, liquid, or gaseous fuels being associated with the heat exchanger.

6. The oven according to one of the preceding claims, **characterized in that** the medium is a thermal oil that is approved for foods.

7. The oven according to one of the preceding claims, **characterized in that** the heat exchangers (14, 15) associated with the baking plates (7, 9) are attached on the side of the baking plates (7, 9) facing away from the batter to be baked.

8. The oven according to claim 7, **characterized in that** the heat exchangers (14, 15) comprise metal sheets (16, 17) connected with the baking plates (7, 9) to define channels for uniformly heating the baking plates (7, 9).

9. The oven according to claim 7 or 8, **characterized in that** the heat exchangers (14, 15) comprise integrated flange-shaped connecting elements (18a, 18b) for connecting the heat exchangers with the ring line (21) by way of a flexible tube (20) or the like.

10. The oven according to one of the preceding claims, **characterized in that** the baking plates (7, 9) are essentially rectangular, and that every second baking plate being a bottom plate (7) is rigidly connected with said carrier (6) with the other baking plates being top plates (9) which at their long side are pivotally connected by a hinge (8) to said bottom plates (7).

11. The oven according to claim 10, **characterized in that** each hinge (8) is aligned approximately parallel to the axis (4) of the carrier (6).

12. The oven according to claims 10 or 11, **characterized in that** several closures (13a, 13b) for locking the baking plates in a closed state are provided on a long side of the baking plates (7, 9) opposite to the hinge (8).

13. The oven according to claims 10 to 12, **characterized in that** the top plates (9) have levers (10) that interact with a cam (11) as the carrier (6) rotates along a path about the axis (4) so that the top plates (9) pivot into an open position in which the top plates (9) extends away from the bottom plates (7) to form a V-shape opening at a defined point of the path.

14. The oven according to one of the preceding claims, **characterized in that** a movable batter pouring mechanism (12) for filling batter between a pair of baking plates (7, 9) is associated with the carrier (6).

15. The oven according to one of the preceding claims, **characterized in that** more than 30, preferably about 50, pairs of baking plates (7, 9) are arranged on the carrier (6).

## Revendications

1. Four pour la cuisson de produit à base de pâte, notamment four à gaufres, avec plusieurs plaques de cuisson (7, 9) disposées par paires et avec au moins une source de chaleur (22) pour tempérer les plaques de cuisson (7, 9), lesquelles sont disposées de telle sorte sur un support (6) en forme de roue pouvant tourner autour d'un axe (4) qu'elles s'étendent à distance de l'axe (4) de façon essentiellement radiale en s'éloignant de ce dernier, **caractérisé en ce que** les paires de plaques de cuisson (7, 9), dans une position fermée dans laquelle elles sont au moins sensiblement adjacentes les unes aux autres, s'étendent essentiellement dans des plans qui s'étirent à travers l'axe (4) du support (6) et une direction s'écartant de celui-ci de façon radiale, et **en ce qu'**au moins un échangeur de chaleur (14, 15) est associé à chaque plaque de cuisson (7, 9) lequel est traversé par un fluide tempéré par le biais de la source de chaleur (22) avec une pression inférieure à 12 bars.

2. Four selon la revendication 1, **caractérisé en ce que** le support est une roue à rayons (5, 6) sur laquelle sont fixées les plaques de cuisson (7, 9) dans la zone éloignée de l'axe (4).

3. Four selon la revendication 2, **caractérisé en ce que** le fluide est conduit aux échangeurs de chaleur (14, 15) via une conduite annulaire (21) qui est reliée par une conduite s'étendant essentiellement de façon radiale à une entrée rotative disposée proche de l'axe.

4. Four selon la revendication 3, **caractérisé en ce que** la conduite annulaire (21) est reliée par le biais de conduites de dérivation (20) à chaque échangeur de chaleur (14, 15) des plaques de cuisson (7, 9), lesquels à leur tour sont reliés par le biais de conduites de retour à une conduite collectrice conduisant à la source de chaleur (22).

5. Four selon l'une des revendications précédentes, **caractérisé en ce que** la source de chaleur (22) destinée à tempérer le fluide est un échangeur de chaleur auquel est associé un réchauffeur électrique, une centrale solaire ou géothermique ou une installation de combustion pour carburant solide, liquide ou gazeux.

6. Four selon l'une des revendications précédentes, **caractérisé en ce que** le fluide est une huile thermique, notamment compatible avec les produits alimentaires.

7. Four selon l'une des revendications précédentes, **caractérisé en ce que** les échangeurs thermiques (14, 15) associés aux plaques de cuisson (7, 9) sont fixés sur la face des plaques de cuisson (7, 9) opposée à la pâte à cuire.

8. Four selon la revendication 7, **caractérisé en ce que** les échangeurs de chaleur (14, 15) sont formés par des tôles (16, 17) reliées aux plaques de cuisson (7, 9) et qui définissent des canaux pour le chauffage homogène des plaques de cuisson (7, 9).

9. Four selon l'une des revendications 7 ou 8, **caractérisé en ce que** des éléments de raccord (18a, 18b) en forme de bride sont intégrés dans les échangeurs de chaleur (14, 15) pour la fixation des échangeurs de chaleur à la conduite annulaire (21) par le biais d'un tuyau (20) ou d'un élément similaire.

10. Four selon l'une des revendications précédentes, **caractérisé en ce que** les plaques de cuisson (7, 9) sont à peu près rectangulaires, et **en ce qu'**une plaque de cuisson sur deux est fixée en tant que plaque inférieure (7) fermement au support (6) et les plaques de cuisson restantes, en tant que plaques supérieures (9), sont chacune reliées en pouvant pivoter par le côté long à une plaque inférieure (7) par le biais d'une charnière (8).

11. Four selon la revendication 10, **caractérisé en ce que** les charnières (8) sont orientées de façon sensiblement parallèle à l'axe (4) du support (6).

12. Four selon l'une des revendications 10 ou 11, **caractérisé en ce que** plusieurs verrous (13a, 13b) sont prévus sur les bords longitudinaux des plaques de cuisson (7, 9) opposés aux charnières (8) pour verrouiller les plaques de cuisson dans leur position fermée.

13. Four selon l'une des revendications 10 à 12, **caractérisé en ce que** les plaques supérieures (9) sont munies de leviers (10) qui coopèrent durant la rotation du support (6) autour de l'axe (4) avec une coulisse (11) de telle sorte que les plaques supérieures (9) pivotent à un point particulier de la course dans une position ouverte s'écartant de la plaque inférieure (7) en formant un V.

14. Four selon l'une des revendications précédentes, **caractérisé en ce qu'**un verseur de pâte (12) mobile est associé au support (6) pour verser de la pâte entre une partie de plaque de cuisson (7, 9).

15. Four selon l'une des revendications précédentes, **caractérisé en ce que** plus de 30 paires de plaques de cuisson (7, 9), en particulier environ 50 paires de plaques de cuisson, sont disposées sur le support (6).
